**Europäisches Patentamt**

**European Patent Office**

**Office européen des brevets**

(19)

(11) Publication number : **0 439 848 B1**

## (12) EUROPEAN PATENT SPECIFICATION

(45) Date of publication of patent specification :
**21.07.93 Bulletin 93/29**

(51) Int. Cl.⁵ : **F02B 31/00, F02M 35/10**

(21) Application number : **90200234.4**

(22) Date of filing : **01.02.90**

(54) **Short circuit primary turbulence system for a combustion engine.**

(43) Date of publication of application :
**07.08.91 Bulletin 91/32**

(45) Publication of the grant of the patent :
**21.07.93 Bulletin 93/29**

(84) Designated Contracting States :
**AT BE CH DE DK ES FR GB GR IT LI LU NL SE**

(56) References cited :
**US-A- 4 318 380**
**US-A- 4 763 624**
**PATENT ABSTRACTS OF JAPAN vol. 6, no.
134 (M-144)(1012) 21 July 1982, & JP-A-57
59019 (SUZUKI JIDOSHA KOGYO K.K.) 09 April
1982**

(56) References cited :
**PATENT ABSTRACTS OF JAPAN vol. 6, no.
184 (M-157)(1062) 21 September 1982, & JP-
A-57 91319 (SUZUKI JIDOSHA KOGYO K.K.) 07
June 1982**

(73) Proprietor : **Volvo Car B.V.**
**Steenovenweg 1**
**NL-5708 HN Helmond (NL)**

(72) Inventor : **Deckers, Roper Jean Helene**
**Beukelaar 12**
**NL-5711 BL Someren (NL)**

(74) Representative : **Timmermans, Anthonius
C.Th., Ir. et al**
**European Patent Attorneys Octrooibureau
Zuid P.O. Box 2287**
**NL-5600 CG Eindhoven (NL)**

EP 0 439 848 B1

Jouve, 18, rue Saint-Denis, 75001 PARIS

## Description

The invention relates to a four-stroke combustion engine, comprising one or more pistons, a cylinder block having formed therein a like number of cylinders in which the pistons are movable, a cylinder head, and like numbers of intake valves, spark plugs and fuel injectors, the pistons approaching the cylinder head closely and having combustion chambers formed therein, main air intake passages and parallel air intake passages being formed in the cylinder head, the parallel intake passages-being at least partially separated form the main intake passages, the parallel intake air passages having inlet ports and outlet ports, the outlet ports opening into the main intake passages, the parallel intake passages being arranged such that air flowing out of the outlet ports is directed essentially at the corresponding spark plugs, the spark plugs being mounted in the cylinder head such that the spark gaps defined by the spark plugs are in the combustion chamber, the fuel injectors being mounted in the main intake passage and being arranged such that fuel flowing from the injectors is directed essentially at the head of the intake valve, the combustion engine further comprising an air container means coupled to the main intake passages and the parrallel intake passages to supply air thereto, and an air control means coupled to the container means to control the air pressure therein via a single throttle valve per chamber of the container means.

Such a four-stroke combustion engine is known from US-A-4,763,624. The container means therein comprises of two separate damping chambers, one damping chamber for the main air intake passages and one damping chamber for the parallel air intake passages. The pressure in the first damping chamber is controlled by a bypass throttle valve and the pressure in the second chamber is controlled by a main throttle valve. The control is such that at zero load and low partial load only the bypass valve, the first damping chamber and the parallel intake passages funtion, and that at partial load and full load the main valve, the second damping chamber and the main intake passages funtion as well. An example of an advanced bypass valve controll as a funtion of the crank angle is presented in Fig. 5(d) of the fornamed US patent.

Measurements revealed, that the improvement in consumption of the known combustion engine is remarkable and that it meets in particular the future European emission requirements (ECE R15-05) also with respect to the nitrous oxide component (NOx), but that nevertheless the nitrous oxide component was considered to be too high.

It is an object of the present invention to provide a four-stroke combustion engine with a lower nitrous oxide component in its exhaust gasses at various loads of the engine.

Thereto the four-stroke combustion engine according to the invention is characterized in that the inlet ports of the parallel intake passages and the inlet ports of the main passages are coupled to a single common chamber of the air container means, so that the air flow through both the main inlet passages and the parallel inlet passages is controlled simultaneously and in equal amounts by a single throttle valve of the air control means.

Not only the nitrous oxide component in the exhaust gasses is lowered, without the requirement to apply an advanced crank angle oriented control which distinguishes between various load conditions in order to individually control valve means, but surprisingly it followed from measurements that also the stability, expressed in terms of fluctuations of the air pressure applied, of the combustion itself has improved considerably. A further advantage of the combustion engine according to the invention,is its constructive simplicity. It has only one chamber instead of two and only one throttle valve instead of two for controlling the outflow.

An even more simple embodiment of the four stroke combustion engine according to the invention is characerized in that the inlet ports of the parallel air intake passages open into the main intake passages.

The invention will be explained with reference to a drawing. In the drawing:

Fig. 1 is a cross-section of a known cylinder head part of a four-stroke combustion engine;

Fig. 2 is a schematic view of in particular the air control part of the four-stroke combustion engine according to the invention; and

Fig. 3 is a schematic view of coupled intake passages for application in the four-stroke combustion engine according to the invention.

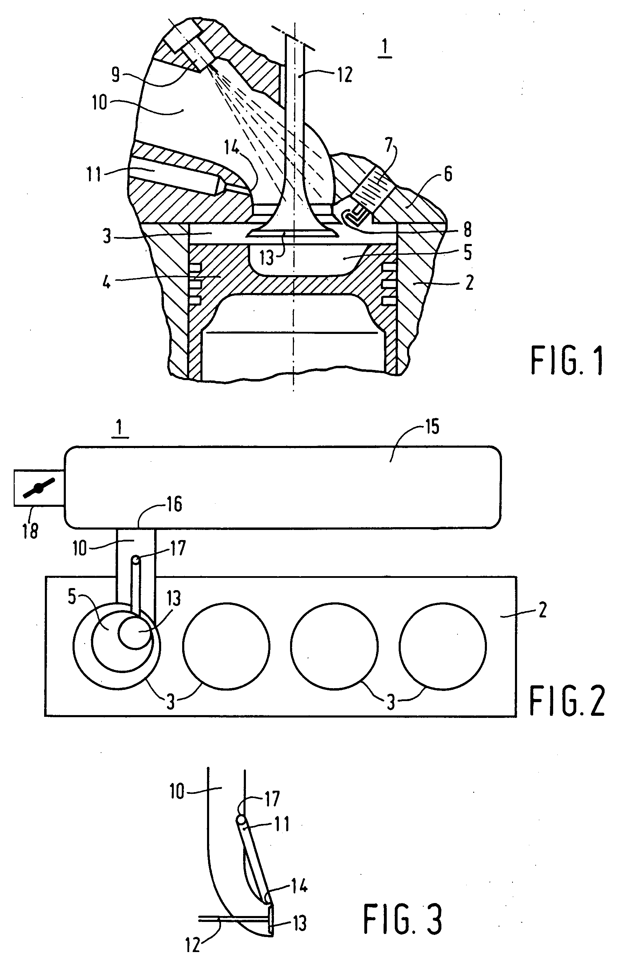

Fig. 1 shows a cross-section of a part of a four stroke combustion engine 1 The part of the engine 1 shows a cylinder block 2 (see also Fig. 2) with cylinders 3. In every cylinder a piston 4 can move. In the piston 4 there is formed a combustion chamber 5. The combustion chamber 5 is usually placed eccentrically relative to the center line of the piston 4, but may also be formed centrally therein.

The part of the engine 1 further shows a cylinder head 6, positioned on top of the cylinder block 2. In the cylinder head 6 there are provided, a partially shown spark plug 7 having a spark gap 8, a fuel injector 9, a main air intake passage 10, a parallel air intake passage 11 and an intake valve 12 The intake valve 12 has a stem and connected thereto a head 13. The parallel air intake passage 11 has an outlet port 14, which opens into the main intake passage 10 and is arranged such that air flowing out of the outlet ports 14 is directed essentially at the spark plug 7. The spark plus 7 is mounted in such a way in the cylinder head 6, that the

2

spark gap 8 stays in the combustion chamber 5, in case the piston 4 practically touches the cylinder head 6. Fuel flowing from the injectors 9 is directed essentially at the head 13 of the intake valve 12.

The combustion engine 1 further comprises an air container means in the form of a single chamber 15. The main intake passage 10 has an inlet port 16 and the parallel intake passage 11 has an inlet port 17. Both inlet ports 16 and 17 are coupled to the single chamber 15.

In Fig. 2 there is shown an embodiment of the combustion engine 1, wherein the inlet port 17 of the parallel intake passage 11 debouches into the main intake passage 10.

In Fig. 3 this is further shown. In addition this figure shows that the parallel intake passage 11 is at least partially separated from the main intake passage 10. The connection between the cylinder block 2 and the single chamber 15 will preferably be identical. In Fig. 2 there is only shown one connection between the cylinder 3 and the single chamber 15. Coupled with the single chamber 15 there is only shown one connection between the cylinder 3 and the single chamber 15. Coupled with the single chamber 15 there is air control means in the form of a single throttle valve 18. Air is supplied to the single throttle valve 18 via air supply means (not shown). The position of the single throttle valve 18 will simply be dependent on the power to be supplied by the combustion engine 1. No external time depended complicated regulating means are required therefore.

In the table presented hereafter the results of the measurements between a standard engine, the prior art engine according to US-A-4,763,624 and according to the present invention are compared with each other. The results show that the nitrous oxide component (NOx) of the present invention is lower than this nitrous component in the prior art engine. In the third column of the table a comparison is made between the so called pressure fluctuation ratio (Dp/p) of these engines. This parameter is a measure of the stability of the combustion of the air fuel mixture. Also the combustion of the engine according to the present invention has improved in comparison with the prior art engine. It says that the burning of the air fuel mixture in the engine according to the, invention is faster than the burning in the prior art engine.

## Table 1

| | NOx | Dp/p |
|---|---|---|
| Standard engine | 100% | 10% |
| Prior art | 120% | 6% |
| Invention | 110% | 8% |

## Claims

1. A four-stroke combustion engine (1), comprising one or more pistons (4), a cylinder block (2) having formed therein a like number of cylinders (3) in which the pistons (4) are movable, a cylinder head (6) and like numbers of intake valves (12), spark plugs (7) and fuel injectors (9), the pistons (4) approaching the cylinder head (6) closely and having combustion chambers (5) formed therein, main air intake passages (10) and parallel air intake passages (11) being formed in the cylinder head (6), the parallel intake passages (11) being at least partially separated from the main intake passages (10), the parallel intake passages (11) having inlet ports (17) and outlet ports (14), the outlet ports (14) opening into the main intake passages (10), the parallel intake passages (11) being arranged such that an air flowing out of the outlet ports (14) is directed essentially at the corresponding spark plugs (7), the spark plugs (7) being mounted in the cylinder head (6) such that the spark gaps (8) defined by the spark plugs (7) are in the combustion chamber (5), the fuel injectors (9) being mounted in the main intake passages (10) and being arranged such that the fuel flowing from the injectors (9) is directed essentially at the head (13) of the intake valve (12), the combustion engine (1) further comprising an air container means coupled to the main intake passages (10) and the parallel intake passages (11) to supply air thereto, and an air control means coupled to the container means to control the air pressure therein via a single throttle valve per chamber of the container means, characterised in that the inlet ports of the parallel passages and the inlet ports of the main passages are coupled to a single common chamber of the air container means, so that the air flow through both the main intake passages and the parallel intake passages is controlled simultaneously and in equal amounts by a single throttle valve of the air control means.

**2.** A four-stroke combustion engine 1, according to claim 1, characterized in that the inlet ports (17) of the parallel air intake passages (10) open into the main intake passages (10).

**Patentansprüche**

**1.** Ein Viertaktverbrennungsmotor (1), der einen oder mehrere Zylinder (4), einen Zylinderblock (2), der darin eine gleiche Anzahl von Zylindern (3) ausgespart hat, in denen die Kolben (4) beweglich sind, einen Zylinderkopf (6) und eine gleiche Anzahl von Einlaßventilen (12), Zündkerzen (7) und Treibstoffzerstäuber (9) umfaßt, wobei sich die Kolben (4) stark dem Zylinderkopf (6) nähern und darin ausgesparte Verbrennungskammern (5) haben, Hauptlufteinlaßkanäle _(10) und Parallellufteinlaßkanäle (119; die im Zylinderkopf (6) ausgespart sind, wobei die Parallellufteinlaßkanäle (11) wenigstens teilweise von den Hauptlufteinlaßkanälen (10) getrennt sind; die Parallellufteinlaßkanäle (11) haben Einlaßtore (17) und Auslaßtore (14), die Auslaßtore (14) münden in die Hauptlufteinlaßkanäle (10), die Parallellufteinlaßkanäle (11) werden so angeordnet, daß Luft, die aus den Auslaßtoren (14) strömt, im wesentlichen auf die entsprechenden Zündkerzen (7) gerichtet ist, wobei die Zündkerzen (7) so in dem Zylinderkopf (6) montiert sind, daß die Elektrodenöffnungen (8), bestimmt von den Zündkerzen (7), sich in der Verbrennungskammer (5) befinden, wobei die Treibstoff-Zerstäuber (9) in den Hauptlufteinlaßkanälen (10) montiert sind und so angeordnet sind, daß der Kraftstoff, der aus den Zerstäubern (9) ausströmt, im wesentlichen auf die Schüssel (11) des Einlaßventils (12) gerichtet ist, der Verbrennungsmotor (1) umfaßt weiter eine Luftvorratseinrichtung, die mit den Hauptlufteinlaßkanälen (10) verbunden ist und mit den Parallellufteinlaßkanälen (11), um diesen Luft zuzuführen, und eine Luftsteuerungsvorrichtung, um den Luftdruck darin über ein einfaches Drosselventil pro Kammer der Vorratseinrichtung zu regeln, dadurch gekennzeichnet, daß die Einlaßtore der Parallellufteinlaßkanäle und die Einlaßtore der Hauptlufteinlaßkanäle an eine einzige gemeinsame Kammer der Luftvorratsvorrichtung gekoppelt werden, so daß der Luftstrom durch sowohl die Hauptlufteinlaßkanäle als auch durch die Parallellufteinlaßkanäle gleichzeitig und in gleichen Mengen durch ein einfaches Drosselventil der Luftsteuerungseinrichtung geregelt wird.

**2.** Ein Viertaktverbrennungsmotor (1) nach Anspruch 1, dadurch gekennzeichnet, daß die Einlaßtore (17) der Parallel-Lufteinlaßkanäle (119 in die Hauptlufteinlaßkanäle (10) münden.

**Revendications**

**1.** Un moteur à combustion à quatre temps (1), comprenant un ou plusieurs cylindres (4), un bloc-cylindres (2) disposant d'un nombre égal de cylindres (3) dans lesquels se déplacent les pistons (4), une culasse (6) et un nombre égal de soupapes d'admission (12), des bougies (7) et des pulvérisateurs (9), les pistons (4) venant près de la culasse (6) et disposant de chambres de combustion (5), des canaux principaux d'admission d'air (10) et des canaux parallèles d'admission d'air (11) évidés dans la culasse (6), les canaux parallèles d'admission d'air (11) étant au moins partiellement séparés des canaux principaux d'admission d'air (10), les canaux parallèles d'admission d'air (11) ont des lumières d'admission (17) et des lumières d'échappement (14), les lumières d'échappement (14) débouchent dans les canaux principaux d'admission d'air (10), les canaux parallèles d'admission (11) sont disposés de manière à ce que l'air qui sort des lumières d'échappement (14) soit dirigé principalement vers les bougies (7), les bougies (7) étant placées dans la culasse (6) de manière à ce que la distance entre les électrodes (8) de la bougie (7) se trouve dans la chambre de combustion (5), les pulvérisateurs (9) étant montés dans les canaux principaux d'admission (10) et sont placés de manière à ce que le carburant qui vient des pulvérisateurs (9) soit principalement dirigé vers la soucoupe (13) de la soupape d'admission (12), le moteur à combustion (1) comprend en outre un dispositif de stockage d'air qui est relié aux canaux principaux d'admission (10) et aux canaux parallèles d'admission afin (11) d'envoyer un volume d'air supplémentaire et d'un dispositif de réglage de l'air relié au dispositif de stockage d'air afin de régler la pression d'air par l'intermédiaire d'une soupape d'étranglement unique par chambre du dispositif de stockage d'air, le moteur se caractérisant par le fait que les lumières d'admission des canaux parallèles d'admission d'air et les lumières d'admission des canaux principaux d'admission sont reliées à une chambre unique commune du dispositif de stockage d'air, si bien que le flux d'air est réglé par les canaux principaux d'admission et les canaux parallèles d'admission simultanément et dans un volume égal par une soupape d'étranglement unique du dispositif de réglage de l'air.

2. Un moteur à combustion à quatre temps (1) conforme à la présente conclusion 1 se caractérisant par le fait que les lumières d'admission (17) des canaux parallèles d'admission d'air (11) débouchent dans les canaux principaux d'admission (10).

FIG.1

FIG.2

FIG. 3